# EUROPÄISCHE PATENTSCHRIFT

(11) **EP 2 281 355 B1**
(45) Veröffentlichungstag und Bekanntmachung des Hinweises auf die Patenterteilung: **04.01.2012**
(21) Anmeldenummer: 09756418.1
(22) Anmeldetag: 22.10.2009
(51) Int. Cl.: H04B 17/00

(54) **ANTENNENANLAGE, INSBESONDERE MOBILFUNK-ANTENNENANLAGE SOWIE ZUGEHÖRIGE ÜBERTRAGUNGS- UND STEUERUNGSEINRICHTUNG**
ANTENNA INSTALLATION, ESPECIALLY MOBILE RADIO ANTENNA INSTALLATION AND ASSOCIATED TRANSMISSION AND CONTROL DEVICE
INSTALLATION D'ANTENNE, NOTAMMENT INSTALLATION D'ANTENNE DE RADIOCOMMUNICATION MOBILE ET DISPOSITIF DE TRANSMISSION ET DE COMMANDE ASSOCIÉ

(30) Priorität: 30.10.2008 DE 102008053851
(43) Veröffentlichungstag der Anmeldung: 09.02.2011
(73) Patentinhaber: Kathrein-Werke KG, 83022 Rosenheim (DE)
(72) Erfinder: SEEOR, Alexander, 83059 Kobermoor (DE); MOHR, Markus, 83022 Rosenheim (DE); GABRIEL, Roland, 83556 Griesstätt (DE)
(74) Vertreter: Flach, Dieter Rolf Paul
(86) Internationale Anmeldenummer: PCT/EP2009/007573
(87) Internationale Veröffentlichungsnummer: WO 2010/049093

(56) Entgegenhaltungen:
- EP-A2- 0 844 485
- DE-A1- 19 937 821
- US-A1- 2004 152 437

## Beschreibung

Die Erfindung betrifft eine Antennenanlage, insbesondere eine Mobilfunk-Antennenanlage nach dem Oberbegriff des Anspruchs 1.

Mobilfunkantennen können in einem oder in mehreren Frequenzbändern strahlen und/oder empfangen, beispielsweise in einem 900 MHz-Band, in einem 1800 MHz-Band, in einem 1900 MHz-Band, oder z.B. in einem UMTS-Band, beispielsweise also in einem Bereich von ca. 1920 MHz bis 2170 MHz. Beschränkungen auf andere Frequenzbereiche liegen grundsätzlich nicht vor.

Bewährte Mobilfunkantennen arbeiten dabei mit Strahlern oder Strahlereinrichtungen, die beispielsweise in zwei senkrecht zueinander stehenden Polarisationen senden und/ oder empfangen können. Es wird insoweit häufig auch von einer X-Polarisation gesprochen, da die beiden Polarisationsebenen vom Grundsatz her in einem +45° Winkel bzw. einem -45° Winkel gegenüber der Horizontalebene oder Vertikalebene ausgerichtet sind. Unabhängig davon können die Mobilfunkantennen häufig in ihrer Hauptstrahlrichtung in einem von einer Horizontalausrichtung abweichenden Abstrahlwinkel eingestellt werden, der vorzugsweise fernsteuerbar veränderbar ist. Es wird hier von einer fernsteuerbaren elektronischen Down-Tilt-Winkeleinstellung und einer zugehörigen Einstelleinrichtung gesprochen, die häufig kurz auch als RET-Einheit bezeichnet wird.

Ein derartiges Steuergerät ist beispielsweise aus der EP 1 356 539 Bl sowie ein zugehöriges Verfahren zum Betrieb einer derartigen RET-Einheit beispielsweise aus der EP 1 455 413 B1 als bekannt zu entnehmen.

Unabhängig von dem Aufbau der Antennenanlagen im Bereich einer Basisstation ist es erforderlich, dass die entsprechenden Antennenanlagen miteinander synchronisiert werden.

Gemäß den meisten Mobilfunkstandards wird zudem die Synchronisation der Basisstation über ein Netzwerk- und Vermittlungssystem sichergestellt, welches auch als "Network and Switching System", kurz als "NSS" bezeichnet wird, welches zudem auch als Backbone-Netzwerk bekannt ist.

Satellitensignale sind hier nicht erforderlich, da die Synchronisation der Teilnehmer in dem jeweiligen Verbindungskanal erfolgt. Die grundlegenden Eigenschaften eines derartigen Mobilfunksystems sind beispielsweise in P. Jung: Analyse und Entwurf digitaler Mobilfunksysteme, Verlag Teubner, Stuttgart, 1997, S. 231-240 wiedergegeben.

Vor diesem Hintergrund erfolgt die ständige Ausweitung und /oder Modernisierung des Mobilfunknetzes auch unter Bereitstellung neuer Mobilfunkanlagen, ggf. auch an einem gleichen Standort, insbesondere an einem gleichen Mast. Bei herkömmlichen Mobilfunkanlagen sind häufig Antennen-seitig elektronische Komponenten (z.B. rauscharme Empfangsverstärker) beispielsweise in Form von stromalarmierten Geräten (nachfolgend auch teilweise kurz als CWA-Geräte bezeichnet, wobei die Abkürzung "CWA" für "Current Window Alarm" steht) vorgesehen. Neuere Antennenanlagen sind dabei beispielsweise auch mit der sog. AISG-Gerätefunktionalität ausgestattet (wobei AISG für "Antenna Interface Standards Group" steht). Daneben sind auch Antennenanlagen z.B. mit einer 3GPP-Gerätefunktionalität ausgestattet, die eine Kommunikation nicht über das AISG-Protokoll, sondern über das 3GPP-Protokoll erlaubt (wobei "3GPP" für "3^{rd} Generation Partnership Project" steht).

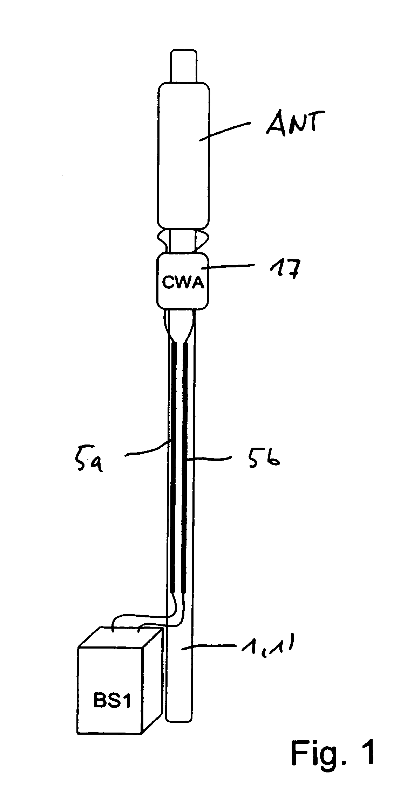

Nachfolgend wird auf Figur 1 Bezug genommen, in der beispielsweise eine herkömmliche Antennenanlage gezeigt ist, wobei die zugehörige Antenneneinrichtung an einem Montageort 1 beispielsweise in Form eines Mastes 1' (oder an einem Gehäuse oder Gebäude etc.) montiert sein kann. Diese Antennenanlage umfasst beispielsweise die eingangs geschilderten geeigneten Strahler, beispielsweise X-polarisierte Strahler, um in zwei Polarisationen zu senden und/ oder zu empfangen.

Die anhand von Figur 1 gezeigte herkömmliche Basisstation, die beispielsweise modernisiert werden soll, umfasst neben der Antenneneinrichtung ANT beispielsweise aktive Antennenkomponenten wie rauscharme Empfangsverstärker (TMA), die nicht über ein Protokoll gesteuert werden können. Derartige Geräte arbeiten beispielsweise auf Basis einer "Stromalarmierung", umfassen also eine CWA-Logik bzw. CWA-Geräte, die in Abhängigkeit von Fehler- und/oder Statusänderungen unterschiedliche Ströme ziehen. Auf dieser Basis kann dann eine Steuerung und/oder Überwachung von Status- und Fehlerzuständen der Komponenten durchgeführt werden. Dazu ist z.B. eine in Figur 1 angedeutete herkömmliche Basisstation BS1 mit CWA-Logik bzw. CWA-Steuerungseinrichtungen ausgestattet. Beispielsweise steht eine Antennen-seitige CWA-Geräteeinheit 17, die der zugehörigen Antenneneinrichtung ANT vorgeschaltet ist, über zwei HF-/DC-Verbindungsleitungen 5a und 5b mit der Basisstation BS1 in Verbindung, so dass über die HF-/DC-Verbindungsleitungen 5a und 5b die zur Antenneneinrichtung ANT gehörigen Strahler entsprechend für den Betrieb der Antennenanlage angesteuert werden können.

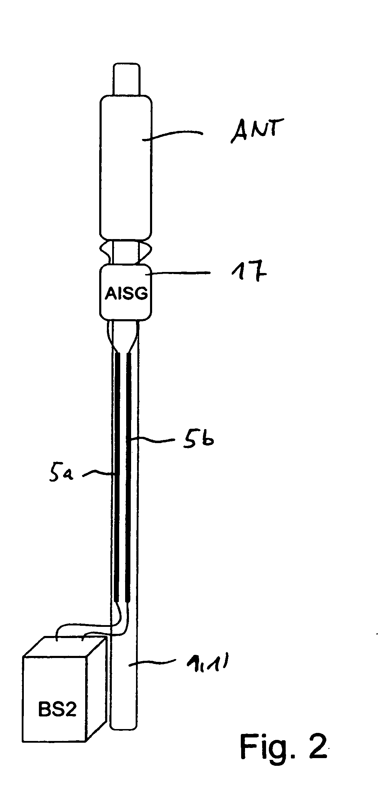

Anhand von Figur 2 ist nunmehr gezeigt, dass beispielsweise die in Figur 1 gezeigte alte Basisstation BS1 ausgetauscht und durch eine neue modernere Basisstation BS2 ersetzt werden soll. Dabei soll beispielsweise gemäß Figur 2 die neue Basisstation mit der Gerätefunktionalität AISG (Antenna Interface Standards Group) ausgestattet sein, die also eine Kommunikation mit der Antenneneinrichtung sowie den zugehörigen Antennen-Komponenten, beispielsweise in Form von rauscharmen Antennenverstärkern, auf Basis des AISG-Protokolls steuern. Dies erfordert also, dass auch die Antennen-seitig vorgesehenen, in Figur 1 angedeuteten, CWA-Geräte und Komponenten 17 (also die sogenannten stromalarmierten Geräte) mit ausgetauscht werden müssen, um diese Geräte auf Basis des AISG-Protokolls anzusteuern.

Abweichend zu dem in Figur 2 wiedergegebenen Beispiel käme auch eine Erneuerung einer herkömmlichen Basisstation BS1 durch Ersatz einer neuen Basisstation BS2 in Betracht, die nicht mit der vorstehend erwähnten AISG-Gerätefunktionalität, sondern mit einer 3GPP-Gerätefunktionalität ausgestattet ist, die eine Kommunikation über das 3GPP-Protokoll erlaubt. In diesem Fall müssten dann also die in Figur 1 gezeigten CWA-Komponenten durch Antennen-Komponenten 17 ersetzt werden, die auf Basis des 3GPP-Protokolls angesteuert werden können. Auch andere Protokolle sind grundsätzlich möglich und denkbar, wobei die entsprechenden Geräte dann auf diese Protokolle abgestimmt sein müssen.

Im Rahmen der Modernisierung kann beispielsweise an der in Figur 2 gezeigten Antennen-Einrichtung auch noch eine sogenannte RET-Einheit nachgerüstet werden, also eine sogenannte fernsteuerbare elektronische Downtilt-Einrichtung. Hierüber kann beispielsweise der Absenkwinkel der in der Antenneneinrichtung vorgesehenen Strahler unterschiedlich eingestellt werden. Auch bei diesen RET-Einheiten handelt es sich um Antennen-seitig vorgesehene Mobilfunk-Komponenten 17, die beispielsweise neben TMA-Vertärkern (also sogenannten rauscharmen "Tower Mounted Amplifier") vorgesehen sein können.

Schließlich soll auch noch auf die EP 0 844 485 A2 verwiesen werden, die eine Messanordnung für eine Mobilfunkantenne zeigt. Dazu ist eine Konverter-Schaltung vorgesehen, die zumindest einen Basisstations-seitigen Anschluss und zumindest einen Antennen-seitigen Anschluss aufweist. Die Konverter-Schaltung ist dabei so aufgebaut, dass bei Anschluss eines Verbrauchers eine über den Antennen-seitigen Anschluss feststellbare Leistungsaufnahme in dem Konverter gemessen werden und die an dem Antennen-seitigen Anschluss anliegende Information über das Messergebnis an einen Basisstations-seitigen Anschluss weitergeleitet werden kann.

Aufgabe der vorliegenden Erfindung ist es, eine Möglichkeit für die Modernisierung einer herkömmlichen Antennenanlage, insbesondere Mobilfunk-Antennenanlage, zu schaffen, die Vorteile gegenüber den bisher vorgenommenen Modernisierungskonzepten aufweist.

Die Aufgabe wird erfindungegemäß bezüglich den im Anspruch 1 angegebenen Merkmalen gelöst. Vorteilhafte Ausgestaltungen der Erfindung sind in den Unteransprüchen angegeben.

Bei den bisherigen nach dem Stand der Technik bekannten Lösungen war es bei der Modernisierung einer herkömmlichen Mobilfunkanlage, die beispielsweise mit stromalarmierten ALD-Geräten gearbeitet hat, notwendig, dass beim Austausch der alten Basisstation und bei der Installation einer neueren moderneren Basisstation die stromalarmierten ALD-Geräte ebenfalls ausgetauscht und durch entsprechende Antennen-seitige Protokoll-gesteuerte Geräte ersetzt werden mussten, beispielsweise Geräte, die unter Verwendung eines AISG-Protokolls oder eines 3GPP-Protokolls arbeiten bzw. ansteuerbar sind. Demgegenüber ist es im Rahmen der Erfindung nunmehr möglich, die Antennen-seitig vorgesehenen CWA-basierenden Gerätekomponenten zu belassen, also nicht auszutauschen sondern lediglich die Basisstation zu modernisieren, wobei der Antenneneinrichtung vor oder nach dem Übertragungsweg der Speiseleitungen eine erfindungsgemäße Konverter-Schaltung vorgeschaltet ist, um hierüber die entsprechende Simulierung und Bereitstellung der für die Steuerung der CWA-Komponenten benötigten Gleichspannung bereitzustellen.

Die erfindungsgemäße Antennenanlage, d.h. insbesondere die erfindungsgemäße Mobilfunk-Antennenanlage umfasst eine Konverterschaltung, die so aufgebaut sein kann, dass sie als komplementäre Lösung für bestimmte herstellerspezifische Basisstationen geeignet ist und dabei für ein ganz bestimmtes Übertragungsprotokoll, beispielsweise ein AISG-Protokoll oder ein 3GPP-Protokoll etc., ausgelegt ist. Abweichend davon ist es aber auch möglich, eine erfindungsgemäße Konverterschaltung vorzusehen und zu verwenden, die ihre basisstations-seitigen Anschlüsse scannt, also jene Anschlüsse, an denen auch die HF-Speiseleitungen von der Basisstation kommend angeschlossen sind (wobei jeweils eine HF-Speiseleitung für eine Polarisation vorgesehen ist). Durch diesen Scannvorgang kann in der Konverterschaltung ermittelt werden, ob die betreffende angeschlossene oder erneuerte Basisstation beispielsweise Steuerungsdaten auf der Basis eines AISG-Protokolls, eines 3GPP-Protokolls oder eines anderen geeigneten Protokolls überträgt. Entsprechend des Abtastergebnisses wird dann in der betreffenden erfindungsgemäßen Konverterschaltung ein Verbindungsaufbau dergestalt möglich, dass die Antennen-seitig angeschlossenen ALD-Geräte (die also als stromalarmierte Geräte in Abhängigkeit von Fehler- und/oder Statusänderungen unterschiedliche Ströme ziehen), entsprechend angesteuert bzw. deren Fehler oder Statusänderungen der Basisstation übermittelt oder die entsprechenden Informationen auf An- bzw. Abfrage, beispielsweise durch die Basisstation zur Verfügung gestellt werden können.

Dabei kann auch über die neue Basisstation die für die Antennen-seitig vorgesehenen CWA-Geräte benötigte Gleichspannung in entsprechender Höhe zur Verfügung gestellt werden.

Mit der vorstehend erwähnten erfindungsgemäßen Antennenanlage mit einer zugehörigen Konverterschaltung ist somit auch eine entsprechende Bereitstellung einer Gleichstromspannung für die CWA-Geräte genau in jener Größenordnung möglich, die für die CWA-Geräte bereits bisher benötigt wurde.

Die erläuterte Antennenanlage und insbesondere Mobilfunk-Antennenanlage kann sich dabei der Energie der Basisstation bedienen, aber nur in dem Rahmen, wie es auch für standardisierte AISG-3GPP-Komponenten erlaubt ist. Die im Konverter gemessenen Ströme des vorgeschalteten CWA-Gerätes dienen nur der Erkennung von Betriebs- und/oder Fehlerzuständen und werden nicht auf die Stromaufnahme der Basisstations-seitigen Konverterseite abgebildet. Sollte die von der Basisstation bereitgestellte Stromhöhe nicht ausreichend sein, wird bevorzugt der benötigte Gleichstrom über eine separate Schnittstelle der Konverterschaltung zur Verfügung gestellt.

In einer bevorzugten Ausführungsform der Erfindung ist noch eine weitere separate Schnittstelle an der betreffenden Konverterschaltung vorgesehen, die entweder zur Ansteuerung des Konverters selbst und/oder zur Ansteuerung der darüber erreichbaren Antennenanordnung und/oder zur Bereitstellung von Gleichstrom für aktive Antennen-Komponenten (einschließlich CWA-Geräte) verwendet werden kann.

Diese erwähnte zusätzliche Schnittstelle an der Konverterschaltung kann bei einer ausreichenden Gleichstrom-Gesamtleistung an der Basisstation auch weggelassen werden.

Weitere Vorteile, Einzelheiten und Merkmale der Erfindung ergeben sich aus den anhand von Zeichnungen beigefügten Ausführungsbeispielen. Dabei zeigen im Einzelnen:
- Figur 1:: ein Beispiel für eine herkömmliche Antennenanlage nach dem Stand der Technik mit einer Basisstation;
- Figur 2:: ein Beispiel für eine Modernisierung einer herkömmlichen Antennenanlage unter Austausch einer stromalarmierten Basisstation und unter Austausch von stromalarmierten Antennenkomponenten und -geräten durch eine Protokoll-konforme Basisstation unter Verwendung von entsprechend Protokoll-gesteuerten Antennenkomponenten;
- Figur 3:: ein Beispiel für eine erfindungsgemäße erneuerte Antennennanlage, bei der ausgehend von der nach dem Stand der Technik bekannten Antennenanordnung gemäß Figur 1 die Basisstation erneuert und eine erfindungsgemäße Konvertereinrichtung zusätzlich installiert wurde;
- Figur 4:: eine schematische Darstellung des erfindungsgemäßen Konverters mit seinen Anschlüssen einschließlich eines zusätzlichen Anschlusses; und
- Figur 5:: eine zu Figur 3 ähnliche Darstellung, bei der die Konvertereinrichtung nicht basisstations-, sondern antennennah an dem anderen Ende der HF-Speisestrecke vorgesehen ist.

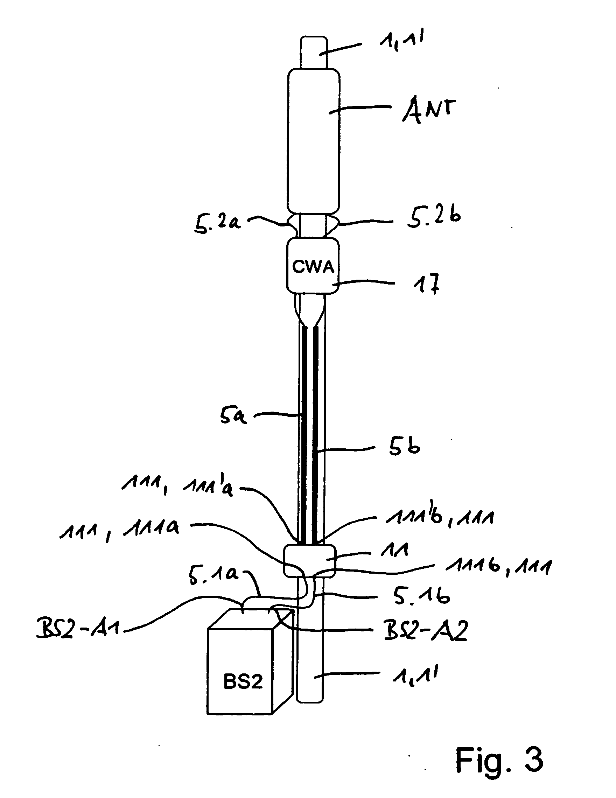

Nachfolgend wird auf Figur 3 Bezug genommen.

Anhand von Figur 3 ist ein erstes erfindungsgemäßes Ausführungsbeispiel gezeigt, bei welchem ausgehend von einer herkömmlichen Mobilfunkanlage gemäß Figur 1 eine herkömmliche Basisstation BS1 durch eine neuere Basisstation BS2 ersetzt worden ist.

Von daher umfasst die Antennenanlage gemäß Figur 3 weiterhin eine Antenneneinrichtung ANT, von der in Figur 3 im Wesentlichen nur das Radom zu ersehen ist, unterhalb dessen die in der Regel mehreren beispielsweise in einem, zwei oder in mehreren Frequenzbändern strahlenden Strahlereinrichtungen vorgesehen sind. Bevorzugt erfolgt der Sende- und/oder Empfangsbetrieb in zwei senkrecht zueinander stehenden Polarisationsebenen. Es wird insoweit auf bekannte Lösungen verwiesen.

An einem Mast 1' stehen wiederum grundsätzlich nur zwei Speiseleitungen 5a und 5b zur Verfügung.

Das Antennensystem ANT wird wiederum auch Antennen-seitig über stromalarmierte (CWA) ALD-Mobilfunkkomponenten 17 gesteuert bzw. betrieben, die über zwei HF-Verbindungsleitungen 5.2a und 5.2b mit der zugehörigen Antenne ANT verbunden sind.

Auch in diesem Ausführungsbeispiel ist für die eine Polarisation der Ausgang BS2-A1 über eine Basisstations-seitige Verbindungsleitung 5.1a mit einem ersten Eingang 111a eines Konverters 11 verbunden und der Antennen-seitige Anschluss 111'a des Konverters 11 ist über die HF-Speiseleitung 5a mit dem einen Eingang der Antennen-seitigen stromalarmierten ALD-Mobilfunk-Komponente 17 verbunden. Für die zweite Polarisation ist eine weitere basisseitige Verbindungsleitung 5.1b mit einem zweiten Eingang 111b des Konverters 11 verbunden, wobei der Antennen-seitige zweite Anschluss 111'b des Konverters über die zweite HF-Speiseleitung 5b (bezüglich der zweiten Polarisation) mit dem Antennen-seitigen zweiten Eingang der stromalarmierten ALD-Mobilfunkkomponente 17 verbunden ist.

In der Zeichnung ist nicht gezeigt, dass über die geschilderten beiden HF-Speisestrecken 5a, 5b von der Basisstation BS2 zur Antenneneinrichtung ANT nicht nur die HF-Signale, sondern auch die zugehörige DC-Versorgung für die Stromalarmierung mit erfolgt.

Für den Betrieb ist nunmehr vorgesehen, dass die Konvertereinrichtung 11 den Leistungsverbrauch bzw. die Stromaufnahme an ihren Antennen-seitigen Schnittstellen misst und in Abhängigkeit dieser Messwerte den Fehler- und/oder Betriebszustand der antennenseitigen CWA-Mobilfunkkomponente vorzugsweise über ein AISG-/3GPP-Protokoll der Basisstation kommuniziert und/oder zur Abfrage dieser Information durch die Basisstation zur Verfügung stellt. Bei dem vom Konverter 11 zur Basisstation BS2 übertragenen Informationssignal kann es sich beispielsweise um ein HDLC-Signal handeln, also ein sogenannte "High-Level-Data-Link-Control" Signal.

Abweichend davon kann auch sofort ein entsprechendes Informationssignal auf Basis eines AISG-Protokolls, eines 3GPP-Protokolls oder dergleichen erfolgen, also allgemein auf Basis eines solchen Protokolls, welches aufseiten der zugehörigen Basisstation BS2 verwendet wird. Basisstatonsseitig verhält sich die Konvertereinrichtung 11 vorzugsweise wie eine standardisierte AISG- oder 3GPP-Mobilfunkkomponente. Allgemein wird also im Konverter eine Umsetzung bevorzugt in ein Protokoll vorgenommen, welches zum Daten- und Informationsaustausch zu der Basisstation BS2 dem Konverter wechselweise übertragen, empfangen und entsprechend ausgewertet und umgesetzt werden kann.

Das vorstehend erwähnte Informationssignal (z.B. HDLC) oder ein entsprechendes Protokollsignal AISG oder 3GPP kann den gemessenen Strom oder einen Ausfallzustand betreffen, beispielsweise bezüglich eines rauscharmen Empfangsverstärkers oder bezüglich zweier rauscharmer, in einem Gehäuse vorgesehener Empfangsverstärker TMA, wie sie für die Antenneneinrichtung ANT vorgesehen sind.

Die Konverterschaltung 11 steuert bzw. wickelt die jeweils benötigte Modulation, Demodulation, die Leistungs-Transformation sowie die Regelung bezüglich des Stromverbrauches ab.

In Abhängigkeit des Aufbaus der Konverterschaltung kann auch sichergestellt werden, dass die entsprechende Leistungsversorgung von der Strom- und Leistungsversorgung für die Basisstation getrennt wird. Mit anderen Worten kann die Leistungsversorgung für die Konvertereinheit (sowie die ALD-Geräte) separat extern zur Basisstation vorgesehen sein.

Sollte eine entsprechende Antennenanlage in Betrieb genommen werden, so ist folgendes Start-Szenario möglich:
1. Die Gleichstrom- und Pilotbypässe an der Konvertereinheit 11 sind geöffnet.
2. Die Basisstation stellt einen benötigten Anteil der Leistungsversorgung (gegebenenfalls von einer externen Leistungsversorgung bereitgestellt) für die Antennen-seitigen Komponenten zur Verfügung und speist diese Leistung beispielsweise mit 12 Volt Gleichstrom in die HF-Speiseleitung.
3. Die Basisstation überträgt das Pilot-Signal an einen der Basisstationsanschlüsse BS2-A1 oder BS2-A2.
4. Der Konverter 11 frägt seine Antennen-seitigen Anschlüsse und Schnittstellen ab, ob stromalarmierte ALD-Komponenten 17 angeschlossen sind (beispielsweise ob ein Gleichstromkurzschluss vorliegt oder nicht).
5. Um angeschlossene stromalarmierte ALD-Komponenten 17 mit entsprechender Leistung (Gleichstrom) zu versorgen, wird der Konverter 11 die in Abhängigkeit des ALD-Zustandes benötigte Leistung aktivieren und zur Verfügung stellen. Diese Leistung kann entweder vollständig oder teilweise von der Basisstation zur Verfügung gestellt werden.
6. Der Konverter misst die Leistungsversorgung einer angeschlossenen ALD-Komponente 17, und zwar permanent, ermittelt so Fehler- und/oder Betriebszustände der ALD-Komponente und stellt diese Information beispielsweise basierend auf dem AISG-Protokoll oder dergleichen der Basisstation zur Verfügung.
7. Die Basisstation speist zumindest anteilig über eine der beiden Speiseleitungen 5a und /oder 5b einen entsprechenden Gleichstrom ein und führt diesen so dem Konverter 11 (auch für dessen Stromversorgung) zu, der dann den erforderlichen Gleichstrom entweder über eine unveränderte Gleichspannung zur Verfügung stellt oder beispielsweise mittels eines Schaltnetzteils in die benötigte Gleichspannung umwandelt, so dass ein entsprechender Gleichstrom dann der Mobilfunkkomponente 17 zur Stromversorgung zugeführt werden kann.

Die von der Basisstation BS2 zur Verfügung gestellte DC-Leistung wird - wenn sie nicht der betreffenden Gleichstromleistung für die angeschlossenen ALD-Geräte entspricht - auf eine geeignete DC-Spannung (z.B. 12 Volt) transformiert (beispielsweise mittels eines Schaltnetzteiles) und zur Versorgung der installierten ALD-Geräten und/ oder Komponenten 17 in das entsprechende Feeder-Kabel 5a bzw. 5b eingespeist.

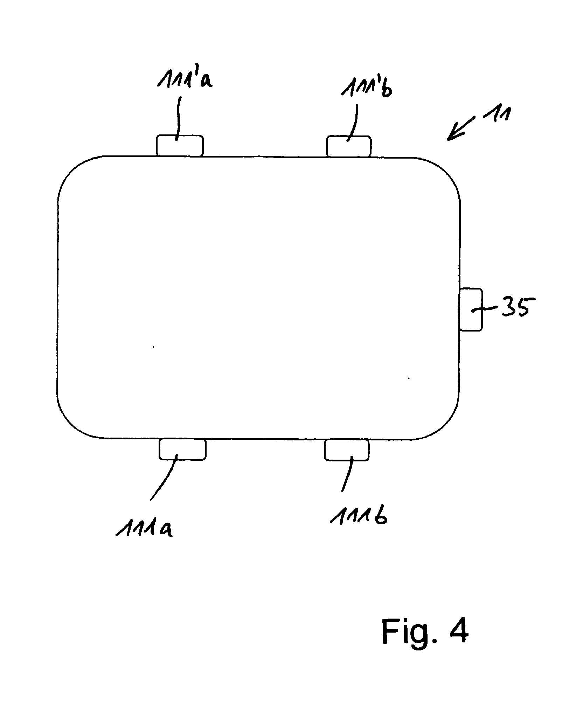

Eine zusätzliche bzw. insgesamt benötigte DC-Leistungsaufnahme der ALD-Geräte und -Komponenten sowie des Konverters 11 kann dem System bei Bedarf über eine weitere Schnittstelle 35 neben den z.B. vier gezeigten Anschlüssen 111 an dem betreffenden Konverter zur Verfügung gestellt werden, wozu nachfolgend auf Figur 4 verwiesen wird.

Figur 3 zeigt schematisch die erfindungsgemäße Konverterschaltung mit zwei Anschlüssen, worüber eine Verbindung über die beiden Leitungen 5.1a und 5.1b zu der neuen Basisstation BS2 hergestellt ist, worüber also die HF-Signale gespeist werden. Antennen-seitig sind ebenfalls zwei Anschlüsse vorgesehen, worüber von der Konverterschaltung 11 bei dem Ausführungsbeispiel gemäß Figur 3 die beiden HF-Speiseleitungen 5a und 5b zu den CWA-Geräten bzw. CWA-Komponenten 17 führen.

Ferner ist in Figur 4 die erwähnte zusätzliche Schnittstelle 35 eingezeichnet, die beispielsweise als Zusatz-Schnittstelle vorgesehen ist, und beispielsweise als AISG-oder 3GPP-Schnittstelle oder Anschlussstelle fungieren kann, auch um über diese zusätzliche Schnittstelle gegebenenfalls eine Gleichstrom-Spannungsversorgung für Antennen-seitige ALD-Geräte und Komponenten 17 bereitzustellen und/oder die Konfiguration des Konverters zu ermöglichen.

Die erwähnte Zusatz-Schnittstelle 35 kann also zu einer zusätzlichen oder insgesamt benötigten Gleichstrom-Leistungsaufnahme aller ALD-Geräte und -Komponenten sowie für den Betrieb der Konverterschaltung und/oder dessen Konfiguration verwendet werden.

Die Antennen-seitig zugewandten Konverter-Anschlüsse sind zunächst spannungsfrei und hochohmig. Die der Basisstation zugewandten Konverter-Anschlüsse sind ebenfalls zunächst hochohmig. Entsprechende DC-Spannung (z.B. die der Basisstation) liegen an ihnen an.

Der Konverter überprüft jeden seiner Antennen-seitigen Ausgänge auf eventuell angeschlossene DC-Verbraucher (beispielsweise doppelte rauscharme Empfangsverstärker DTMA, vorgesehene Bias Tee Schaltungen SBT oder beispielsweise vorhandene RET-Schaltungen zur fernsteuerbaren Einstellung des Downtilt Winkels) und misst regelmäßig (wobei das Zeitintervall vorzugsweise konfigurierbar ist) deren Stromaufnahme. Die an einer HF-Speiseleitung (Feeder) anliegende DC-Spannung wird nur an den oder die ANT-Konverter-Ausgänge durchgeschaltet, welche auch mit einem DC-Verbraucher verbunden sind. Alle Konverter-Ausgänge sind dabei kurzschlussfest.

Eine systemgegebene Konfigurationseinstellung kann über weitere Konverter-Schnittstellen voreingestellt werden. Die Basisstations-seitig aufgenommene Leistung wird stets zur Versorgung der angeschlossenen Verbraucher und der Konverterschaltung verwendet.

Der Konverter 11 überwacht ferner seine Basisstations-seitigen Anschlüsse 111a, 111b auf eventuell vorhandene Protokollsignale (z.B. AISG-, 3GPP- oder andere davon abweichende Protokolle). Diese Überwachung kann statisch oder im Multiplexverfahren erfolgen.

Aus dem erläuterten Aufbau wird deutlich, dass die oben erwähnte zusätzliche Konverter-Schnittstelle 35 bei einer ausreichenden Gleichstrom-Gesamtleistung an den basisstations-seitigen Anschlüssen auch weggelassen werden kann. Ebenso kann über die optionale Zusatz-Schnittstelle 35 an dem Konverter auch eine Kommunikation mit den hierüber erreichbaren ALD-Geräten und -Komponenten 17 erfolgen, beispielsweise zur Einstellung und Kontrolle der ALD-Kommunikation unabhängig von den Basisstationen, beispielsweise auch im Falle einer Systeminstallation, falls die Basisstation noch nicht installiert ist.

Die Konfiguration des Konverters kann sowohl über deren HF-Anschlüsse (z.B. über die Basisstations-seitigen Anschlüsse 111a, 111b) als auch über die zusätzliche Schnittstelle 35 vorgenommen werden.

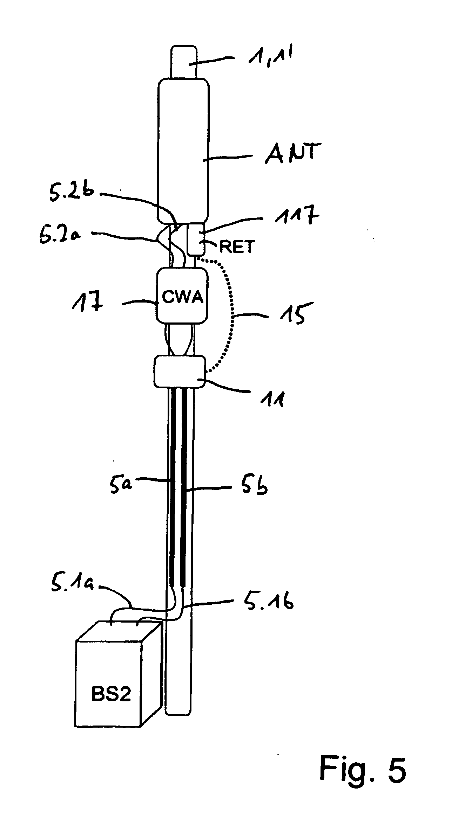

Anhand von Figur 5 ist nur schematisch gezeigt, dass der erfindungsgemäße Konverter 11 nicht in der Nähe der Basisstation (beispielsweise am unteren Ende des Mastes 1'), sondern eher im oberen Endbereich des Mastes 1' in der Nähe der Antenne ANT angeordnet sein kann, beispielsweise unmittelbar vor einer CWA-Geräteeinheit oder -Komponente 17. Dies würde allerdings keine Änderung der Funktionalität zur Folge haben. Auch dieser Konverter würde wie vorstehend beschrieben aufgebaut sein und betrieben werden können.

Die Ausführungsbeispiele sind für Konverter erläutert worden, die quasi als separate Geräte oder Baueinheiten im Bereich der Basisstation vor der HF-Übertragungsstrecke oder in der Nähe der zugehörigen Antenneneinrichtung am anderen Ende der in der Regel über dem Mast oder einem Gebäude verlaufenden HF-Strecke vorgesehen sind.

Der erläuterte Konverter 11 mit seinen entsprechenden Funktionen kann aber auch beispielsweise in einer Antenneneinrichtung ANT, in einem CWA-Gerät oder in einer CWA-Komponente 17 oder in der zugehörigen Basisstation BS1 bis BS2 integriert sein.

In Figur 5 ist ferner noch eine sogenannte RET-Einheit, d.h. eine fernsteuerbare elektronische Down-Tilt-Einrichtung 117 eingezeichnet, die beispielsweise über eine separate Datenleitung 15 mit dem Konverter 11 kommunizieren bzw. darüber angesteuert werden kann. Diese Datenleitung 15 kann auch zur Gleichstromversorgung der RET-Einheit 117 dienen. Diese Datenleitung 15 kann beispielsweise über den separaten Anschluss 35 (Figur 4) angeschlossen sein und darüber die RET-Einheit 117 ansteuern. Die entsprechenden Daten der RET-Einheit können über die Datenleitung 15 auch in umgekehrter Richtung zum Konverter und dann über die Speiseleitungen oder zumindest über eine der beiden Speiseleitungen 5a, 5b zur Basisstation übertragen werden. Bei Bedarf kann die RET-Einheit mit einer von der Gleichspannung der Mobilfunkkomponente 17 unterschiedlichen Gleichspannung versorgt werden, gegebenfalls ebenfalls wieder unter Verwendung eines Schaltnetzteiles, welches im Konverter 11 vorgesehen sein kann.

Aus der erläuterten Schilderung geht hervor, dass der Konverter die Funktion der Abbildung unterschiedlicher ALD-Geräte in die Basisstation unterstützt und durchführt. D.h. also, dass die Kommunikationsschnittstellen der einzelnen ALD-Geräte in die betreffende Basisstation hinein wandern können. Dies ermöglicht besonders komfortabel, dass eine ältere Basisstation unter Verwendung von stromalarmierten CWA ALD-Geräten oder -Komponenten durch eine neuere Basisstation(die beispielsweise auf einem 3GPP-Protokoll basierend arbeitet) ausgetauscht werden kann, ohne ein entsprechendes stromalarmierendes ALD-Gerät ersetzen zu müssen. Diese Austauschbarkeit gilt auch für Basisstationen unterschiedlicher Hersteller.

Zusammenfassend kann also festgehalten werden, dass der erfindungsgemäße Konverter als "Protokollwandler" ausgestaltet ist, der eine stromalarmierende Umschaltung (CWA-Gleichstrom-verbrauchsgrößen) in einem AISG- oder beispielsweise 3GPP-Protokoll überträgt und konvertiert.

Diese Kombination eines solchen Konverters z.B. mit einem stromalarmierten TMA (rauscharmen Antennenverstärker) bildet diesen somit auf einen AISG- oder ein 3GPP-konformen Eingangsverstärker ab.

Wie erläutert kann die Protokollerkennung an den Basisstations-seitigen Konverter-Anschlüssen statisch oder dynamisch erfolgen. Da allerdings bei Austausch einer alten Basisstation und Installation einer neuen Basisstation stets festgelegt ist, auf welcher Protokollbasis die Steuerung erfolgen soll und kann, kann auf die ständige, vorstehend erwähnte Überwachung der Basisstations-seitigen Eingänge des Konverters im Hinblick auf bestimmte anstehende Protokollsignale auch verzichtet werden.

## Patentansprüche

1. Antennenanlage, insbesondere Mobilfunk-Antennenanlage mit folgenden Merkmalen:
- mit zumindest einer Basisstation (BS2),
- mit zumindest einer Antenneneinrichtung (ANT),
- mit zumindest einer HF-Speiseleitung (5;5a, 5b), worüber die Sende- und/oder Empfangssignale zwischen der Basisstation (BS2) und der zugehörigen Antenneneinrichtung (ANT) übermittelt werden, wobei die Antenneneinrichtung (ANT) in zumindest einer Polarisationsebene empfangen und/oder senden kann,
- mit zumindest einer Antennen-Komponente (17), die zwischen der zumindest einen HF-Speiseleitung (5, 5a, 5b) und Strahlern in der zumindest einen zugehörigen Antenneneinrichtung (ANT) geschaltet ist,
- die Steuerung und Überwachung der Antenneneinrichtung (ANT) oder zumindest einer der Antenneneinrichtung (ANT) vorgeschalteten Antennen-Komponente (17) erfolgt auf Basis einer Stromalarmierung,
**gekennzeichnet durch** die folgenden weiteren Merkmale:
- die Basisstation (BS2) ist so aufgebaut, dass sie zum Betrieb der Antenneneinrichtung (ANT) protokollgesteuerte Signale übertragen und empfangen und entsprechend auswerten kann,
- zwischen der Basisstation (BS2) und der zumindest einen stromalarmierten Antennenkomponente (17) ist eine Konverterschaltung (11) vorgesehen,
- die Konverter-Schaltung (11) weist zumindest einen Basisstations-seitigen Anschluss (111; 111a, 111b) und zumindest einen Antennen-seitigen Anschluss (111; 111'a, 111'b) auf,
- die Konverter-Schaltung (11) ist so aufgebaut, dass bei Anschluss eines Verbrauchers eine über den Antennen-seitigen Anschluss (111; 111'a, 111'b) feststellbare Leistungsaufnahme in dem Konverter (11) gemessen wird, und
- die Konverter-Schaltung (11) ist so aufgebaut, dass die Information über das Ergebnis der Leistungsmessung an zumindest einem Antennen-seitigen Anschluss (111; 111'a, 111'b) an einem Basisstations-seitigen Anschluss (111; 111a, 111b) zur Verfügung gestellt wird.

2. Antennenanlage nach Anspruch 1, **dadurch gekennzeichnet, dass** von Seiten der Basisstation (BS2) eine Antennensteuerung und/oder eine Steuerung von Mobilfunkkomponenten (17) auf Basis eines Protokolls, insbesondere eines AISG-, eines 3GPP- oder eines davon abweichendes Übertragungsprotokolls erfolgt.

3. Antennenanlage nach Anspruch 1 oder 2, **dadurch gekennzeichnet, dass** die über die zumindest eine Speiseleitung (5; 5a, 5b; 5.1a, 5.1b) an der Konverter-Schaltung (11) anliegende Gleichspannung nur an demjenigen Antennen-seitigen Anschluss (111; 111'a, 111'b) der Konverter-Schaltung (11) unverändert oder angepasst durchschaltbar ist, an dem eine Gleichstrom-verbrauchende Antennen-Komponente (17) angeschlossen ist.

4. Antennenanlage nach einem der Ansprüche 1 bis 3, **dadurch gekennzeichnet, dass** zumindest zwei HF-Speiseleitungen (5; 5a, 5b) vorgesehen sind, in deren Strecke die Konverter-Schaltung (11) geschaltet ist.

5. Antennenanlage nach einem der Ansprüche 1 bis 4, **dadurch gekennzeichnet, dass** die Konverter-Schaltung (11) in der Nähe der Basisstation (BS2) geschaltet ist, d.h. näher zur Basisstation (BS) als zur Antenne (ANT), insbesondere am unteren Ende des Mastes (1').

6. Antennenanlage nach einem der Ansprüche 1 bis 4, **dadurch gekennzeichnet, dass** die Konverter-Schaltung (11) antennennah vorgesehen ist, d.h. näher zur Antenne (ANT) als zur Basisstation (BS2), insbesondere am oberen Ende des Mastes (1').

7. Antennanlage nach einem der Ansprüche 1 bis 6, **dadurch gekennzeichnet, dass** die Konverter-Schaltung (11) so aufgebaut ist, dass sich ein an dem zumindest einen Antennen-seitigen Anschluss (111; 111'a, 111'b) anliegendes stromalarmiertes Zustands- oder Fehlersignal an dem Basisstations-seitigen Anschluss (111; 111a, 111b) protokoll-konform abbildet, insbesondere in ein AISG- oder ein 3GPP-konformes Signal konvertiert wird.

8. Antennelange nach einem der Ansprüche 1 bis 7, **dadurch gekennzeichnet, dass** die Konverter-Schaltung (11) so aufgebaut ist, dass ein an dem Basisstations-seitigen Anschluss (111; 111a, 111b) in der Konverter-Schaltung (11) eingespeistes Gleichstromsignal an dem zumindest einen Antennen-seitigen Anschluss (111; 111'a, 111'b) eingespeist wird.

9. Antennenanlage nach einem der Ansprüche 1 bis 8, **dadurch gekennzeichnet, dass** die Konverter-Schaltung (11) so aufgebaut ist, dass diese einen zusätzlichen Anschluss (35) aufweist, wobei eine an dem zusätzlichen Anschluss (35) einspeisbare Gleichspannung in den Antennen-seitigen Anschluss (111; 111'a, 111'b) eingespeist wird.

10. Antennenanlage nach Anspruch 8 oder 9, **dadurch gekennzeichnet, dass** eine der Konverter-Schaltung (11) an ihrem Basisstations-seitigen Anschluss (111; 111a, 111b) und/oder an ihrem zusätzlichen Anschluss (35) eingespeiste Gleichspannung oder eingespeiste Gleichspannungen in eine Gleichspannung unterschiedlicher Größe konvertierbar ist, die in den zumindest einen Antennen-seitigen Anschluss (111; 111'a, 111'b) eingespeist wird.

11. Antennenanlage nach einem der Ansprüche 1 bis 10, **dadurch gekennzeichnet, dass** die Antennen-seitig vorgesehenen Anschlüsse (111; 111'a, 111'b) an der Konverter-Schaltung (11) vor Betriebsaufnahme spannungsfrei und hochohmig sind.

12. Antennenlage nach einem der Ansprüche 1 bis 11, **dadurch gekennzeichnet, dass** die Basisstations-seitigen Anschlüsse (111; 111a, 111b) der Konverter-Schaltung (11) vor Betriebsbeginn auch bei anliegenden Gleichspannungen hochohmig sind.

13. Antennenanlage nach einem der Ansprüche 1 bis 12, **dadurch gekennzeichnet, dass** die Konverter-Schaltung (11) so aufgebaut ist, dass die antennenseitig vorgesehenen Anschlüsse (111; 111'a, 111'b) in einem vorzugsweise konfigurierbaren Zeitintervall auf angeschlossenen Gleichstromverbrauch überprüft werden, und zwar im Hinblick auf deren Stromaufnahme.

14. Antennenanlage nach einem der Ansprüche 1 bis 13, **dadurch gekennzeichnet, dass** alle Antennen-seitigen Anschlüsse (111; 111'a, 111'b) der Konverter-Schaltung (11) kurzschlussfest sind.

## Claims

1. Antenna system, in particular a mobile communications antenna system, having the following features:
- at least one base station (BS2),
- at least one antenna device (ANT),
- at least one HF feed line (5; 5a, 5b), via which the transmission and/or reception signals are transmitted between the base station (BS2) and the associated antenna device (ANT), the antenna device (ANT) being able to receive and/or transmit in at least one polarisation plane,
- at least one antenna component (17), which is switched between the at least one HF feed line (5, 5a, 5b) and radiators in the at least one associated antenna device (ANT),
- the antenna device (ANT) or at least one antenna component (17) which is connected upstream from the antenna device (ANT) is controlled and monitored on the basis of current alarming,
**characterised by** the following further features:
- the base station (BS2) is constructed in such a way that it can transmit and receive protocol-controlled signals and analyse them accordingly in order to operate the antenna device (ANT),
- a converter circuit (11) is provided between the base station (BS2) and the at least one antenna component (17) in a current-alarmed state,
- the converter circuit (11) comprises at least one connection on the base station side (111; 111 a, 111 b) and at least one connection on the antenna side (111; 111'a, 111'b),
- the converter circuit (11) is constructed in such a way that when a load is connected, a power uptake, which can be determined via the connection on the antenna side (111; 111 a, 111 b), is measured in the convertor, and
- the converter circuit (11) is constructed so that the information about the result of the power measurement at at least one connection on the antenna side (111; 111'a, 111'b) is made available at a connection on the base station side (111; 111 a, 111 b).

2. Antenna system according to claim 1, **characterised in that** the base station (BS2) carries out antenna control and/or control of mobile communication components (17) on the basis of a protocol, in particular an AISG or 3GPP protocol or a different transmission protocol from these.

3. Antenna system according to claim 1 or 2, **characterised in that** the direct voltage which is present at the converter circuit (11) via the at least one feed line (5; 5a, 5b; 5.1a, 5.1b) can be switched through unchanged or adjusted only at that connection of the converter circuit (11) on the antenna side (111; 111'a, 111'b) to which an antenna component (17) which consumes direct current is connected.

4. Antenna system according to any one of claims 1 to 3, **characterised in that** at least two HF feed lines (5; 5a, 5b) are provided, and the converter circuit (11) is connected in their path.

5. Antenna system according to any one of claims 1 to 4, **characterised in that** the converter circuit (11) is connected near the base station (BS2), in other words nearer to the base station (BS) than to the antenna (ANT), in particular at the lower end of the mast (1').

6. Antenna system according to any one of claims 1 to 4, **characterised in that** the converter circuit (11) is provided near the antenna, in other words nearer to the antenna (ANT) than to the base station (BS2), in particular at the higher end of the mast (1').

7. Antenna system according to any one of claims 1 to 6, **characterised in that** the converter circuit (11) is constructed so that a current-alarmed state or fault signal which is present at the at least one connection on the antenna side (111; 111'a, 111'b) is mapped onto the connection on the base station side (111; 111a, 111b) in a manner which conforms to protocol, in particular being converted into a signal which conforms to AISG or 3GPP.

8. Antenna system according to any one of claims 1 to 7, **characterised in that** the converter circuit (11) is constructed so that a direct current signal which is fed into the converter circuit (11) at the connection on the base station side (111; 111 a, 111 b) is fed into the at least one connection on the antenna side (111; 111'a, 111'b).

9. Antenna system according to any one of claims 1 to 8, **characterised in that** the converter circuit (11) is constructed so that it has an additional connection (35), a direct voltage which can be fed into the additional connection (35) being fed into the connection on the antenna side (111; 111'a, 111'b).

10. Antenna system according to claim 8 or 9, **characterised in that** direct voltage(s) which is/are fed into the converter circuit (11) at its connection on the base station side (111; 111a, 111b) and/or at its additional connection (35) can be converted into a direct voltage of different magnitude, which is fed into the at least one connection on the antenna side (111; 111'a, 111'b).

11. Antenna system according to any one of claims 1 to 10, **characterised in that** the connections on the converter circuit (11) which are provided on the antenna side (111; 111'a, 111'b) are de-energised and high-resistance before operation begins.

12. Antenna system according to any one of claims 1 to 11, **characterised in that** the connections of the converter circuit (11) on the base station side (111; 111a, 111b) are high-resistance before operation begins, even if direct voltages are present.

13. Antenna system according to any one of claims 1 to 12, **characterised in that** the converter circuit (11) is constructed so that the connections which are provided on the antenna side (111; 111'a, 111'b) are tested at a preferably configurable time interval for connected direct current consumption, and in particular with regard to their current uptake.

14. Antenna system according to any one of claims 1 to 13, **characterised in that** all of the connections of the converter circuit (11) on the antenna side (111; 111'a, 111'b) are short-circuit-resistant.

## Revendications

1. Installation d'antenne, en particulière installation d'antenne pour radiocommunication mobile avec les éléments techniques suivants :
elle comprend
- au moins une station de base (BS2),
- au moins un dispositif à antenne (ANT),
- au moins une ligne d'alimentation HF (5 ; 5a, 5b) au moyen de laquelle les signaux émis et/ou les signaux reçus sont transmis entre la station de base (BS2) et le dispositif à antenne associé (ANT), ledit dispositif à antenne (ANT) étant capable de recevoir et/ou d'émettre dans au moins un plan de polarisation,
- au moins un composant d'antenne (17) qui est branché entre ladite au moins une ligne d'alimentation HF (5, 5a, 5b) et des éléments rayonnants dans ledit au moins un dispositif à antenne associé (ANT),
et la commande et la surveillance du dispositif à antenne (ANT) ou d'au moins un composant d'antenne (17) branché en amont du dispositif à antenne (ANT) ont lieu en se basant sur une alarme de courant,
**caractérisé par** les caractéristiques suivantes :
- la station de base (BS2) est réalisée de telle façon qu'elle est capable de transmettre et de recevoir, pour le fonctionnement du dispositif à antenne (ANT), des signaux sous la commande d'un protocole, et de les évaluer en correspondance,
- entre la station de base (BS2) et ledit au moins un composant d'antenne (17) commandé en se basant sur une alarme de courant il est prévu un circuit convertisseur (11),
- le circuit convertisseur (11) comprend au moins un raccordement côté station de base (111; 111a, 111b) et au moins un raccordement côté antenne (111; 111'a, 100'b),
- le circuit convertisseur (11) est ainsi réalisé que lors du raccordement d'un dispositif consommateur, une augmentation de puissance dans le convertisseur (11), susceptible d'être constatée via le raccordement côté antenne (111 ; 111'a, 111'b), est mesurée, et
- le circuit convertisseur (11) est ainsi réalisé que les informations relatives aux résultats de la mesure de puissance à au moins un raccordement côté antenne (111 ; 100'a, 111'b) sont mises à disposition au niveau d'un raccordement côté station de base (111 ; 111a, 111b).

2. Installation d'antenne selon la revendication 1, **caractérisé en ce que**, depuis le côté de la station de base (BS2) il se produit une commande de l'antenne et/ou une commande des composants de radiocommunication mobile (17) sur la base d'un protocole, en particulier d'un protocole de transmission AISG, 3GPP, ou d'un protocole de transmission différent.

3. Installation d'antenne selon la revendication 1 ou 2, **caractérisé en ce que** la tension continue appliquée via ladite au moins une ligne d'alimentation (5 ; 5a, 5b ; 5.1a, 5.1 b) au circuit convertisseur (11) peut être transmise sans modification ou de manière adaptée uniquement à celui des raccordements côté antenne (111 ; 111'a, 111'b) du circuit convertisseur (11) auquel est branché un composant d'antenne (17) qui consomme un courant continu.

4. Installation d'antenne selon l'une des revendications 1 à 3, **caractérisé en ce qu'**il est prévu au moins deux lignes d'alimentation HF (5 ; 5a, 5b), le circuit convertisseur étant branché dans leur trajet.

5. Installation d'antenne selon l'une des revendications 1 à 4, **caractérisé en ce que** le circuit convertisseur (11) est branché au voisinage de la station de base (BS2), c'est-à-dire plus proche de la station de base (BS) que de l'antenne (ANT), en particulier à l'extrémité inférieure du mât (1').

6. Installation d'antenne selon l'une des revendications 1 à 4, **caractérisé en ce que** le circuit convertisseur (11) est prévu au voisinage de l'antenne, c'est-à-dire plus proche de l'antenne (ANT) que de la station de base (BS2), en particulier à l'extrémité supérieure du mât (1').

7. Installation d'antenne selon l'une des revendications 1 à 6, **caractérisé en ce que** le circuit convertisseur (11) est ainsi constitué que l'image d'un signal d'état ou d'erreur, basé sur une alarme de courant et appliqué audit au moins un raccordement côté antenne (111 ; 111'a, 111'b), est formée de manière conforme à un protocole au niveau du raccordement côté station de base (111 ; 111a, 111b), et en particulier convertie en un signal conforme au protocole AISG ou 3GPP.

8. Installation d'antenne selon l'une des revendications 1 à 7, **caractérisé en ce que** le circuit convertisseur (11) est ainsi constitué qu'un signal de courant continu injecté dans le circuit convertisseur (11) au niveau du raccordement côté station de base (111 ; 111a, 111b) est injecté au niveau dudit au moins un raccordement côté antenne (111 ; 111'a, 111'b).

9. Installation d'antenne selon l'une des revendications 1 à 8, **caractérisé en ce que** le circuit convertisseur (11) est ainsi constitué que celui-ci comprend un raccordement supplémentaire (35), et une tension continue susceptible d'être injectée au niveau du raccordement supplémentaire (35) est injectée dans le raccordement côté antenne (111 ; 111'a, 111'b).

10. Installation d'antenne selon la revendication 8 ou 9, **caractérisé en ce qu'**une tension continue ou plusieurs tensions continues injectée(s) dans le circuit convertisseur (11) au niveau de son raccordement côté station de base (111 ; 111a, 111b) et/ou au niveau de son raccordement supplémentaire (35) est/sont susceptible(s) d'être convertie(s) en une tension continue d'intensité différente, qui est injectée dans ledit au moins un raccordement côté antenne (111 ; 111'a, 111'b).

11. Installation d'antenne selon l'une des revendications 1 à 10, **caractérisé en ce que** les raccordements prévus côté antenne (111 ; 111'a, 111'b) au niveau du circuit convertisseur (11) sont hors tension et à forte valeur ohmique avant la mise en service.

12. Installation d'antenne selon l'une des revendications 1 à 11, **caractérisé en ce que** les raccordements côté station de base (111 ; 111a, 111b) du circuit convertisseur (11) présentent une forte valeur ohmique avant commencement du fonctionnement également lorsque des tensions continues sont appliquées.

13. Installation d'antenne selon l'une des revendications 1 à 12, **caractérisé en ce que** le circuit convertisseur (11) est ainsi constitué que les raccordements prévus côté antenne (111 ; 111'a, 111'b) sont vérifiés à intervalles temporels de préférence susceptible d'être configurés, vis-à-vis des dispositifs consommateurs de courant continu branchés, et cela à l'égard de leur consommation de courant.

14. Installation d'antenne selon l'une des revendications 1 à 13, **caractérisé en ce que** tous les raccordements côté antenne (111 ; 111'a, 111'b) du circuit convertisseur (11) sont résistants aux courts-circuits.
